# EUROPEAN PATENT SPECIFICATION

(11) **EP 3 004 751 B1**
(45) Date of publication and mention of the grant of the patent: **11.10.2017**
(21) Application number: 14732590.6
(22) Date of filing: 22.05.2014
(51) Int. Cl.: F24H 9/20, G05D 23/19

(54) **BOILER CONTROL SYSTEM AND METHOD**
KESSELSTEUERUNGSSYSTEM UND -VERFAHREN
SYSTÈME DE COMMANDE DE CHAUDIÈRE

(30) Priority: 28.05.2013 GB 201309482; 13.08.2013 GB 201314476
(43) Date of publication of application: 13.04.2016
(73) Proprietor: Dynamic Energy Products Limited, St Marys Bay Kent TN29 0HF (GB)
(72) Inventor: COPE, Derek, St Marys Bay Kent TN29 0HF (GB); AUGENSEN, Tore, N-1284 Oslo (NO)
(74) Representative: Ertl, Nicholas Justin
(86) International application number: PCT/GB2014/051575
(87) International publication number: WO 2014/191721

(56) References cited:
- WO-A1-94/02787
- WO-A1-99/48713
- GB-A- 2 389 891

## Description

The invention relates in general to control of temperature controlled heating processes, in particular heating boilers. More specifically, the invention relates to a boiler control unit which includes a delayed cycle controller.

Heating boilers (oil or gas) for heating the rooms of a building and/or for providing tap hot water are usually controlled by a thermal relay which provides an on/off temperature control. Such boilers are typically dimensioned in such a way that they are able to manage conditions in which an extremely high heating demand exists, i.e. during the coldest winter days. This means that the capacity of the heating boiler is utilised to the greatest extent during the cold periods of the year. During the remaining parts of the year, the boilers are over-dimensioned, and consequently, the overall efficiency is not optimal.

A solution to the above problem is presented in WO94/02787, which discloses a delayed cycle control unit for a heating boiler equipped with an on-off controllable burner. The use of such a control unit results in an improved overall energy efficiency, particularly in periods with low loads, i.e. during moderate and warm seasons. The boiler is provided with a thermal relay, which provides a temperature responsive signal which is switched on when the temperature in the boiler underpasses a lower temperature level and switched off when the temperature in the boiler exceeds a higher temperature level.

When the high temperature limit is reached, the burner is switched off, as also would be the case if the thermal relay controlled the burner directly. However, when the low temperature limit is reached, the burner is not switched on immediately, as would be the case if the thermal relay controlled the burner directly. Instead, the control unit is arranged to measure the cooling time of the boiler, by measuring the time that has elapsed between the on-to-off transition and the off-to-on transition of the signal provided by the thermal relay. The control unit is further arranged to add a certain percentage to this cooling time, resulting in a time delay, and to switch on the burner when this time delay has elapsed.

The system interfaces with an external computer so that parameters such as the additional cooling time delay percentage may be set. This system provides an improved energy efficiency. However, the additional cooling time delay percentage is a static quantity, which must be preset by an operator.

An improvement is disclosed in WO2006/036064, in which the delay is dynamically adjusted based on changes in the temperature of the boiler outlet. Essentially, if the temperature drop during the extended cooling period is small (based on a measure which is linked to the temperature drop during the normal cycling function), the extended cooling period is increased in duration (by increasing the delay percentage value). If the temperature drop during the extended cooling period is large (again based on a measure which is linked to the temperature drop during the normal cycling function), the extended cooling period is reduced in duration (by decreasing the delay percentage value).

A first problem with the known systems is the complexity of the algorithm for dynamic control.

A second problem is that the system cannot be fitted to certain types of boiler, in particular having fully electronic control. In such boilers, a discrepancy between the boiler firing command generated by the thermostat and the actual firing of the burner will be detected and can lead to a system shut down. Thus, it becomes difficult to implement the override control of the burner. GB 2 389 891 dislcoses a delayed cycle control system which additionally acquires data about energy consumption. WO 99/48713 disclsoes another boiler control system which measures outflow energy in order to self-adaptively respond to the thermal load and reduce the number of on-off cycles.

The invention is defined by the boiler control system according to claim 1 and the method of controlling a boiler heating device according to claim 5. According to the invention, there is provided a boiler control system for controlling a heating device in a boiler, comprising: a delayed cycle controller for activating and deactivating said heating device based on an upper temperature threshold and a lower temperature threshold; a temperature sensor for measuring a boiler temperature; an interrupt unit for interrupting a heating device enable signal thereby to implement the delayed cycle control of the delayed cycle controller, wherein the heating device enable signal is a signal externally input to the boiler which takes priority over an internal thermostatic control of the heating device in the boiler.

This system provides duty cycle control by interrupting an enable signal. This means that the normal thermostatic boiler control does not need to be altered, so that the system can be used with electronic boilers without generating errors. In particular, the heating device enable signal is one which takes priority over the internal boiler thermostatic control of the burner without the need to intercept the thermostatic control circuit. Thus, the system can be implemented with no internal modifications to a standard boiler.

The system aims to reduce the amount of fuel consumed without reducing the targeted environmental temperature within the building. This is achieved in that the temperature control makes use of the heat absorption transferred from the heating system into the fabric of the building.

The interrupt unit can comprise a relay switch. By interrupting the enable signal, the deactivation function is provided. By allowing the enable signal to pass, the activation function is provided (and only when the enable signal is in any case high). The enable signal is used cycle-by-cycle, whereas it normally would be used with a slower frequency of change.

The delayed cycle controller can be adapted to set the lower temperature threshold based on temperature measurements. This provides dynamic control of the lower temperature threshold. The heating device enable signal can comprise a building management system burner enable signal.

The invention also provides a method of controlling a boiler heating device, comprising: sensing a boiler temperature; activating and deactivating said heating device based on an upper temperature threshold and a lower temperature threshold to provide delayed cycle control, wherein the upper temperature threshold and lower temperature thresholds are below the internal upper and lower thermostat control settings of the boiler, such that the internal upper thermostat control setting is not reached; interrupting a heating device enable signal thereby to implement the delayed cycle control. The heating device enable signal is a signal externally input to the boiler which takes priority over an internal thermostatic control of the heating device in the boiler.

This method sets the temperature thresholds used during the delayed cycle control (the "upper and lower temperature thresholds") to be below the internal settings used during the delayed cycle control (the "internal upper and lower temperature thresholds"). This means the thermostatic switching is inhibited because the delayed cycle control settings are used first.

A calibration operation can be used to determine the upper temperature threshold. In particular, the upper temperature threshold can be set to the internal upper threshold of the boiler in its original setup. The original thresholds will be termed "pre-calibration" thermostat control settings.

The calibration operation can further comprise measuring a cooling time between pre-calibration internal upper and lower thermostat control settings. This cooling time value is then used to determine when to take temperature measurements for the dynamic control of the lower temperature threshold.

The upper temperature threshold is set equal to the pre-calibration internal upper temperature threshold, and after the calibration the internal upper temperature threshold is increased. In this way, the function of the internal thermostat is effectively disabled.

After the calibration, the internal pre-calibration lower temperature threshold is also increased. This means that the internal thermostatic control will always be demanding a burning function as soon as the enable signal is allowed by the delayed cooling cycle control.

By increasing the boiler thermostat control settings, when the system of the invention takes over control of the burner (and cycles it at the original desired temperature setting) the boiler control system is ensured to reach the temperature at which the system of the invention takes control. By emulating a non-enable signal to the burner, the cooling period can be started even though the internal boiler thermistor did not reach its own target temperature.

The system thus disables the burner at a set temperature (such as 0.5, 1, 2 or 3 degrees) below the maximum boiler thermostat set point, and allows the cooling cycle to begin.

The lower temperature threshold is controlled dynamically. For example, it is set to one of a fixed set of temperatures, one of which is equal to the pre-calibration lower thermostat control setting and the others are at values below the pre-calibration lower temperature threshold.

The lower temperature threshold is for example selected based on a temperature measurement at a fixed point in time after the upper temperature threshold is reached.

An example of the invention will now be described with reference to the accompanying drawings, in which:
Figure 1 shows a known boiler control unit;
Figure 2 shows a timing diagram to explain the operation of the known unit as well as the operation of the control unit of the invention;
Figure 3 shows a boiler control unit of the invention in schematic form;
Figure 4 shows an example of boiler control of the invention in more detail; and
Figure 5 shows timing diagrams to explain the method of the invention compared to the known methods;
Figure 6 shows timing further diagrams to explain the method of the invention.

The invention provides a boiler control system based on delayed cycle control, in which the control is implemented by interrupting a heating device enable signal (such as a BMS enable signal). This means the system can be used with electronic boilers without the boiler being aware (in terms of generating error codes) of the control taking place.

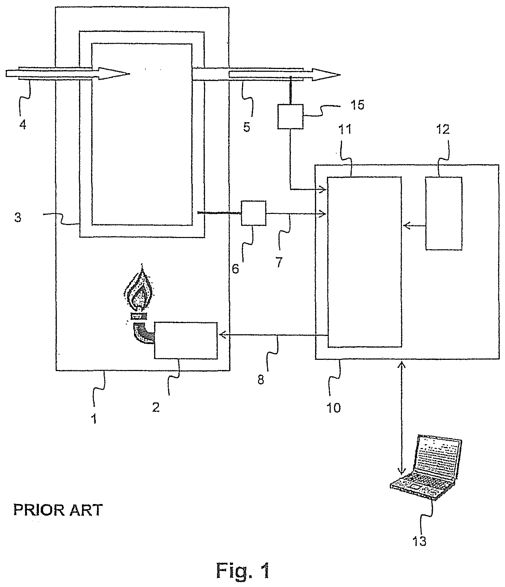

Figure 1 shows a known heating boiler 1 controlled by a control unit 10.

The boiler 1 comprises a water tank 3, an inlet conduit 4, an outlet conduit 5, and a burner 2 controlled in an on-off manner by a delayed cycle controller 11 in the control unit 10. A thermal relay 6 provides a temperature responsive signal 7 which is switched on when the temperature in the boiler underpasses a lower temperature level. The signal 7 is further switched off when the temperature in the boiler exceeds a higher temperature level.

The delayed cycle controller 11 is further arranged to produce a control signal 8 for input to the burner 2, in order to switch the burner 2 on and off as a function of the thermal relay signal and the time. More specifically, the control signal is switched off immediately when the thermal relay signal 7 is switched off, and the control signal is switched on at a delayed point of time after the thermal relay signal 7 is switched on.

In this known system, the delay is calculated by the controller 11 as a certain percentage of the boiler's cooling time, i.e. the time elapsed from the on-off transition to the off- on transition of the signal 7 provided by the thermal relay 6. The control unit 10 is further adapted to communicate with an external computer 13.

A temperature sensor 15 is arranged to measure the temperature of the tap hot water in the outlet 5 from the tank 3.

The basic controller 11 with no delayed cycle control is arranged to compare the temperature measured with the temperature sensor 15 with a preset lower temperature level, and to start the burner if the measured temperature becomes lower than the lower temperature level.

The known delayed cycle controller adds a time period after the time when the temperature becomes lower than the lower temperature level. In a first known example, a cooling time delay percentage is stored as a fixed value, so that the cooling time is extended by a given fraction. In a second known example, the percentage value is dynamically controlled, and an algorithm for this purpose is shown as 12.

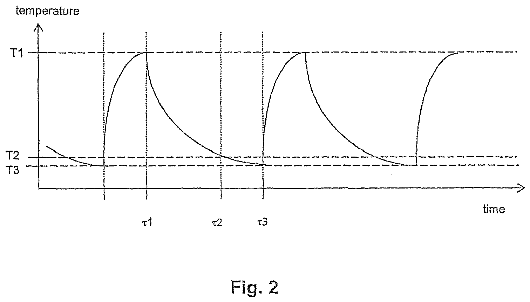

Figure 2 is a graph illustrating the boiler temperature as a function of time, in order to illustrate the operation of the delayed cycle controller.

At time 0 the burner is fired.

At time T1 the signal 7 provided by the thermal relay 6 is switched off, and the controller 11 switches off the burner 2. The cooling time of the thermal relay is measured by the controller 11 as the period T2- T1.

At T2, the signal 7 provided by the thermal relay 6 is switched on. Without delayed control, the burner would then be turned on.

However, the delayed cycle controller 11 does not start the burner immediately, at time T2, but delays the start until the time T3. The delay T3- T2 is calculated by the controller 11 as the stored delay percentage of the measured cooling time T2- T1.

As shown, the extended cooling time gives rise to cooling beyond the original lower threshold temperature of T2 to temperature T3.

By way of example, the duration of time 0 - T1 may be of the order of 5 minutes, and the duration of time T1 to T2 may be of the order of 10 minutes.

The known system makes use of the existing temperature sensor 15 which forms part of the original boiler equipment. However, for some boiler types, for example with electronic control systems, it is not possible to use this signal in the manner previously proposed, since it can result in a shut down of the boiler based on a mismatch between the burner signal generated by the thermostatic control and the actual burner performance.

A first aspect of the system of the invention is to provide a delayed cycle control which does not require alteration to any of the original boiler equipment. This means that the electronic control system can be made to be essentially unaware of the presence of the system of the invention.

In commercial boiler systems, a building management system provides an enable signal for control of the boiler, which essentially functions as an override signal. The building management system ("BMS") is used to control systems within a building which contribute to the building's energy usage, and this can include heating, lighting and ventilation control. The BMS can also provide access control and other security systems such as closed-circuit television (CCTV) and motion detectors. Fire alarm systems and elevators are also sometimes linked to a BMS, for monitoring.

The heating control provided by BMS is typically implemented as an enable signal provided to the boiler. This enable signal is a command sent to the burner instructing it to fire in accordance with the thermostatic control, and a non-enable signal overrides the thermostatic control. The enable signal is thus a signal external to the boiler which takes priority over the internal thermostatic control of the heating device in the boiler. By withholding the enable signal, the BMS can prevent burner operation when it detects that such burner operation is not needed.

A preferred implementation of the invention makes use of this enable signal as a means for providing delayed cycle control. In particular, the system of this example of the invention takes control of the burner "enable" signal, which is provided to the boiler from the building management system (BMS).

Electronic boilers are designed to follow the instructions of the BMS in preference to the thermostat cycles. Thus, by generating a BMS signal to turn off the burner or delay the burner turning on, the system can function with all types of boiler without generating errors.

The system of the invention is based on a microprocessor controlled self-setting thermostat for boilers. The system overrides the boiler internal thermostat and controls the boiler burning cycles without interfering with any of the boiler's internal electrical or mechanical equipment.

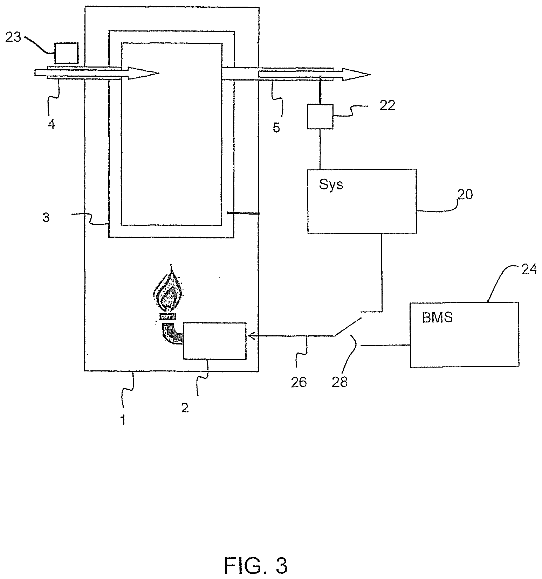

Figure 3 shows an example of system of the invention in schematic form.

The system 20 is independent of the boiler 1 and does not rely on signals from any internal boiler components. Instead, a flow temperature sensor 22 is part of the system. A further temperature sensor 23 is provided on the return pipe. This can be used for example to ensure that if the water drops below a minimum temperature, the boiler can be instructed to fire immediately.

The boiler is controlled by a building management system 24 which provides a burner enable signal 26.

The invention overrides this, and this is represented schematically by the switch 28 which allows the burner control signal output by the system 20 to replace the BMS enable signal. The switch 28 may for example be implemented as contact relays.

In one implementation of the invention, the system is implemented using a remote monitoring system which can be fitted to a consumer unit. This can provide wireless GPRS (email) messages relating to the operation of the system.

For example, fuel saving tests can be carried out by disabling the operation of the system and comparing fuel consumption statistics. These can be collected from communication with a pulse counting smart meter.

The system needs an initial calibration. In particular, the system needs to be able to switch off the burner at the end of the burner cycle, instead of the boiler's internal thermostatic control. To enable this, when the system is fitted, it performs a monitoring function, during which the maximum and minimum temperatures provided by the normal boiler thermostatic control (i.e. T1 and T2 in Figure) are monitored. At the limit, only one burn cycle is needed for this monitoring, but two or three cycles may be followed as the initial calibration.

This initial calibration typically takes place when the boiler starts from cold (or with a water temperature below 30 degrees).

The system monitors the boiler's outgoing water temperature using its own thermistor which is piggybacked next to the internal boiler thermistor. It also monitors the return water temperature to the boiler.

In a first possible implementation, to enable the burn cycle to be ended at the same temperature (T1 in Figure 2), the thermostat setting of the boiler is increased by the installer after the initial calibration, so that the system of the invention then takes charge of ending the burner cycles. An alternative second implementation is for the system temperatures to chosen a small step below the monitored boiler settings.

By using the BMS "enable" signal, the system also takes charge of the timing of starting the burner cycles, as described below.

For the first implementation, to fit the system of the invention, the boiler's internal thermostat settings should can be raised by a fixed amount after the initial calibration, such as 3°C (for both the upper and lower switching thresholds), to enable the compensation system to be implemented.

The maximum temperature as implemented by the compensation system is set this same 3°C lower than the new boiler internal setting, so that the original maximum temperature setting is preserved. In this way, at the desired maximum temperature, the control of the switching off of the boiler can be implemented by the system of the invention instead of by the internal boiler control.

As mentioned above, delayed cycle controllers are known. This invention can be applied to a system using a known delayed cycle controller, by providing additional components which take control of the BMS enable signal. Instead, the system can be implemented as a single self-contained unit.

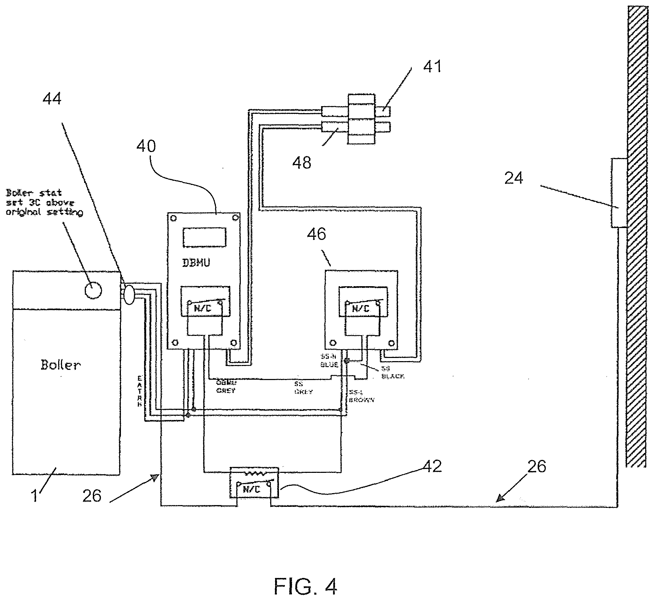

Figure 4 shows how the system can be implemented in a way which makes use of an existing delayed cycle controller 40. This controller is associated with a temperature sensor 41 at the boiler output.

The BMS 24 provides its enable signal 26. This is interrupted by a zero contact relay 42. The enable signal is a low voltage signal, whereas the relay is controlled by a mains signal. The mains lines are shown as 44 between the boiler 1, the controller 40 and also the sensor unit 46 which forms part of the added components of the system of the invention.

The sensor unit 46 carries out the monitoring during the initial calibration described above. It is linked to a temperature sensor 48 at the boiler output.

The switch remains closed during the calibration so that the enable signal is not interrupted, and the boiler monitoring takes place. After the initial calibration, the sensor 46 provides control of the enable signal, thereby controlling when burning stops (because the boiler thermostat temperature has not yet been reached) and also controls when the burning starts again (because the raised boiler lower thermostat setting will have been passed).

The known use of the controller 40 would provide an interrupt signal to the burner of the boiler. In the arrangement of Figure 4, this burner interrupt signal is no longer coupled to the boiler. Instead, it is used to control the passage of the BMS enable signal to the boiler.

This arrangement essentially has two switches in series; the switch of the controller 40 and the switch of the sensor 46. During the initial calibration, the sensor 46 causes the normal internal boiler function to be followed, because the sensor 46 prevents any interruption of the enable signal. It is open so that the relay switch is not activated to open the relay switch (which is normally closed).

During the subsequent control, the sensor 46 allows the output of the controller 40 to be used to control the relay 42 and thereby implement the delayed cooling cycle.

In an integrated system, there is of course no need for separate switches, and the full functionality can be integrated into a single unit.

The invention also provides a new approach to the way of controlling the extended cooling cycle. As explained above, the known method involves setting a target time duration for the extended cooling cycle.

The system of the invention can provide an approach based on temperature settings. This provides a more stable approach, which is less prone to instable variations. The dynamic control of the boiler burn and cool cycles is made simpler, and in particular requires no measuring of time delays. Furthermore, by using temperature measurement as the control parameter, it can be ensured that desired temperature levels are not exceeded, for example a minimum hot water temperature (which may be set of hygiene reasons).

As shown in Figure 2, the effect of extending the cooling period is to lower the temperature at the end of the cooling cycle.

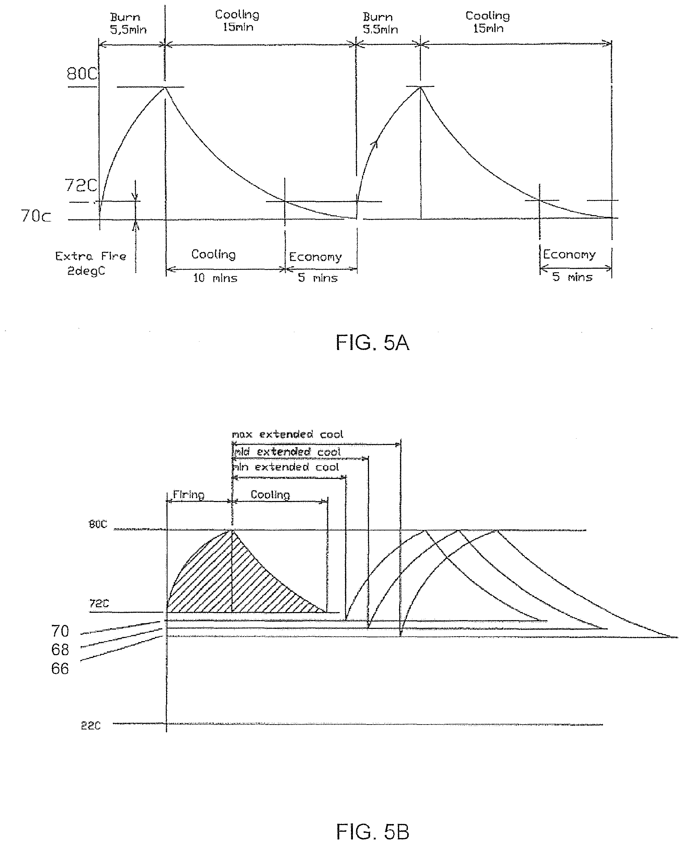

Figure 5A shows typical values. The boiler thermostat temperature settings (before the settings are changed after the calibration) are at 72 degrees (lower) and 80 degrees (higher). The burn cycle last 5.5 minutes in this example, and the normal cooling cycle lasts 10 minutes.

This implementation of the invention provides a set of extended temperature thresholds, such as 2, 4 and 6 degrees below the minimum temperature. Figure 5A shows the system set to the first extended threshold of 70 degrees, As shown, this results in an extended cooling period by an additional 5 minutes. The efficiency cycle carried out by the system of the invention is based on temperature detection rather than time monitoring as in the known approaches.

The minimum temperature is reduced by the fixed amount (such as 2 degrees below the starting point). Only when this reduced temperature is detected is the signal provided to fire the boiler, again by allowing the BMS enable command to be activated.

To determine if this level of extension of the cooling period is possible, the temperature is monitored over time. For example, the temperature is monitored periodically, for example every 4 seconds.

A fixed time period beyond the normal cooling time (i.e. T1 to T2; 10 minutes in this example) is allowed. The normal cooling time T1 to T2 is measured in the calibration phase.

If the temperature is maintained above this lower threshold for all of the additional time period, and for a set number of burn cycles (such as 5), this indicates that the temperature can be reduced further because the demand from the building is not large enough to need more rapid burn cycles.

For example, if cooling for a period of a set amount longer than the normal cooling time can be allowed without the lower temperature being reached, the cooling period can be extended further by lowering the temperature threshold by a further 2 degrees. This set amount may be 15% but it may be higher, for example 25% or 50%. It may for example lie in the range 10% to 60%. A longer cooling period may for example be associated with the lower temperature thresholds than for the higher temperature thresholds.

The firing time to raise the water to the upper temperature switching point will increase as a result, but this increase in firing time is relatively short compared to the increase in time of the cooling period, so that overall efficiency gains are obtained.

There is a fixed set of temperature adjustments, for example 2, 4 and 6 degrees below the lower temperature threshold. These have associated cooling period extensions at which the temperature is analysed to determine if the threshold needs to be changed. By way of example, the 2, 4 and 6 degree thresholds can be associated with 20%, 30% and 50% cooling period extensions.

The thresholds may be at 1 degree intervals instead of 2 degree intervals. Furthermore, there may be many more intervals, with the lowest temperature corresponding to a minimum temperature setting of the system which may be selected based on a minimum desired hot water temperature.

The system thus dynamically sets the temperature difference based on the temperature measurements at the relevant timing points.

As a building heats up, the boiler cooling period extends as it takes longer for the heat within the building to decay, and the switching to a lower temperature threshold is based on detection of this longer cooling period. The system continues extending the cooling period until the preset limits are reached, for example the lowest temperature setting. However, the control of the system is based on the temperature levels rather than based on fixing time periods, which gives stability and ensures that temperatures cannot drop below required levels, for example a minimum stored hot water temperature.

The use of three settings is of course just an example. There may be more settings, and they may differ by 1 degree instead of 2 degrees. Similarly, the associated extended cooling periods can be different. They may also be settable to different values.

Figure 5B shows three fixed temperature thresholds of 70, 68 and 66 degrees (i.e. 2, 4 and 6 degrees below the lower threshold of 72 degrees). It shows how the first setting of 70 degrees provides a minimum extended cooling period, the second setting of 68 degrees provides a middle extended cooling period, and the third setting of 66 degrees provides a maximum extended cooling period.

If there is a decrease in demand on the boiler, cooling will be more gradual, so the lower temperature threshold will not be reached at the end of the extended time period (the additional 20%, then 30% then 50% in the example above). This signifies that the temperature is not dropping rapidly, so efficiency gains can be made by moving to a more extended cooling period. The temperature reached at the new extended time period is then monitored.

If there is an increase in demand on the boiler, cooling will be more rapid. A shorter extension period is then desired to make the boiler run more efficiently and to provide the required heat to the building sufficiently. If the lower threshold setting is too low, the building may cool too rapidly between firing cycles to meet the desired comfort levels, so the cooling period needs to be shortened.

Thus, if the lower temperature threshold is already reached at the time point being monitored, then the lower temperature threshold needs to be increased to a higher level, to reduce the extended cooling period.

The control is thus based on temperature detection, instead of setting time periods. The lower temperature threshold varies between the set of possible values dynamically based on the temperature reached at a given time after the cooling cycle begins. This is representative of the load and therefore is representative of whether extended cooling cycles are appropriate.

In this way, the system dynamically cycles between the different lower temperature thresholds based on the properties of the building, which influence the cooling cycle time.

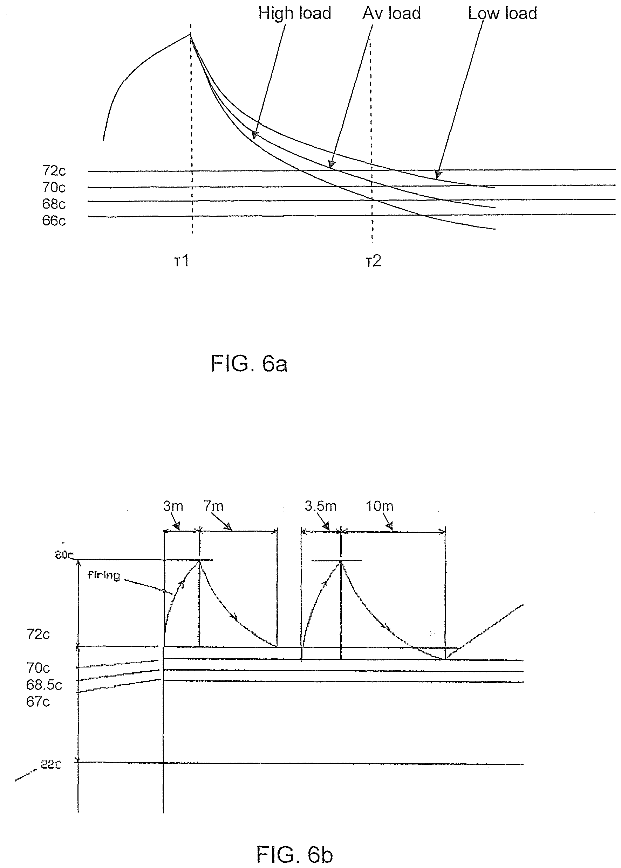

Figure 6a shows how the cooling curve varies in dependence on the building load, and shows the different thresholds.

Figure 6b shows a first cycle at the boiler thermostat setting of 72 degrees. This can be the last cycle of the calibration period. The burn cycle and cooling cycle times are measured, for example 3 minutes and 7 minutes. The 22 temperature line is the target room temperature.

The second cycle is for a first reduced lower setting of 70 degrees. The burn cycle has extended to 3.5m, and the cooling period has extended to 10m. If the time setting at which the assessment is made is for example at a threshold of 15% (7m +15% = 8.05m), a further reduction in the lower temperature threshold is possible, because the lower temperature has not been reached. The new temperature threshold is set and a new timing point for controlling the decision making for changing that temperature threshold.

The operation of the system thus comprises two main steps:

### 1 Start up and calibration procedure

The system measures the outgoing water temperature and registers the maximum and minimum temperature. This is carried out during normal boiler running. This provides a calibration of the temperature sensor of the system to the normal boiler operation.

The system also measures the durations of the firing and cooling cycles (i.e. time 0 to T1 and T1 to T2).

In the first possible implementation, the boiler thermostat settings are raised by a fixed amount, such as 1, 2 or 3 degrees. The maximum and minimum temperature points are then implemented by the system, with values that correspond to the previously set internal boiler values. In this way, the system of the invention controls the boiler based on the desired boiler settings, as previously set, whereas the internal boiler thermostat is effectively rendered out of circuit.

The amount by which the boiler thermostat settings are raised will depend on the accuracy of the electronic circuit to monitor the various temperatures.

The system is then for controlling the boiler based on the monitored temperature and the maximum and minimum set points.

In the second possible implementation, there is no need to change the boiler thermostat settings.

### 2. During running:

The system overrides and controls the boiler using its own maximum and minimum set points as described above.

The calibration approach described above for the first implementation requires the boiler settings to be altered, so that the system can provide control at the temperatures set on the boiler thermostat.

The alternative second implementation is based on system providing upper and lower temperatures which are below the boiler settings, for example 0.2, 0.5, 1, 2 or 3 degrees below. The measured burn time and cool time will be almost identical because the temperature difference remains the same, particularly when a small temperature difference is used. This enables automatic calibration without needing the boiler settings to be altered as in the approach explained above. This provides a preferred approach. In this case, the system operates below the boiler set temperature settings, but this can just be 0.5 degrees below, for example, or even less, for example down to 0.2 degrees.

For example, if the upper thermostat setting is 80 degrees, then when the water reaches 79.5 degrees, the enable signal that told the boiler to fire is taken away from the boiler thermostat and is routed through the controller of the invention. This will cut the firing signal and cause the boiler to go into cooling. The cooling can then be extended to a lower temperature than the internal boiler setting, and once this lower temperature is reached, the enable signal can be returned to the control of the boiler.

The system can then also perform monitoring functions. In particular, it can detect any change in the boiler temperature settings and automatically adapt to them. It does this by performing a new calibration operation (as explained above) periodically.

This can for example be every fixed number (e.g. 50) of burn/cool cycles. This calibration thus reveals any changed temperature settings on the boiler thermostat. However, it does not require any intervention to the boiler control circuitry or sensors.

In particular, this measuring cycle can be performed:
- when the system is powered up and switched on;
- when the system is switched on/off/on (so that a measuring cycle can be manually enforced);
- in response to a drop out of mains supply;
- periodically (such as every 50 Burn/Cool cycles), to detect an increase in boiler temperature setting. While the system is operational, it cannot detect any increase in the boiler temperature settings because the system is overriding any increased settings on the boiler. Thus, to detect increased temperature settings, a self-initiated measuring cycle (i.e. with the system function not operational) is performed followed by new maximum and minimum set points being defined, the fixed amount (such as 1, 2 or 3 degrees) below the monitored temperature value.

The system can, however, detect a decrease in the boiler temperature settings while it is active, i.e. without needing a calibration operation. When the maximum temperature is not achieved this is indicative of a decrease in the boiler temperature setting. In response to detecting a drop in the boiler's temperature settings, the system will then perform a new calibration measuring cycle and set the required new maximum and minimum set points the fixed amount below monitored temperatures to be in control of the boiler.

As mentioned above, the system can be equipped with a GPRS system to gather and transmit fuel saving data. It can additionally count and transmit pulse counts from a gas or oil electronic meter, for illustration on a customer terminal. Instructions can also be received remotely, i.e. via the internet to take the system in and out of operation at set times so that meter readings can be compared between the system being used or being disabled temporarily. The system settings can then also be changed to optimize the fuel saving capabilities.

As mentioned above, the system can be implemented as an upgrade to an existing optimizing system. However, it can equally be a new stand alone system for application to a boiler without any previous optimization.

The system is preferably operates so that at no time is the water temperature from the boiler allowed to drop below a set level, such as 60 degrees (or a set temperature somewhere in the range 60 to 70 degrees). The maximum flow temperature which was set before implementing the system is also not increased.

The invention is typically of interest for 50kW to 800kW boilers.

Various modifications will be apparent to those skilled in the art.

## Claims

1. A boiler control system for controlling a heating device (2) in a boiler, (1) comprising:
a delayed cycle controller (11 ;40) for activating and deactivating said heating device (2) based on an upper temperature threshold and a lower temperature threshold; and
a temperature sensor (22) for measuring a boiler temperature,
**characterised in that** the system comprises:
an interrupt unit (28;42) for interrupting a heating device enable signal (26) thereby to implement a delayed cycle control of the delayed cycle controller, wherein the heating device enable signal (26) is a signal externally input to the boiler which takes priority over an internal thermostatic control of the heating device in the boiler when it is not interrupted by the interrupt unit.

2. A system as claimed in claim 1, wherein the interrupt unit (28, 42) comprises a relay switch (42).

3. A system as claimed in any preceding claim, wherein the delayed cycle controller (11, 40) is adapted to set the lower temperature threshold based on temperature measurements.

4. A system as claimed in any preceding claim, wherein the heating device enable signal (26) comprises a building management system burner enable signal.

5. A method of controlling a boiler heating device (2) in a boiler (1), comprising:
sensing a boiler temperature; and
activating and deactivating said heating device (2) based on an upper temperature threshold and a lower temperature threshold to provide delayed cycle control,
**characterised in that** the upper temperature threshold and lower temperature thresholds are below the internal upper and lower thermostat control settings of the boiler (1), such that the internal upper thermostat control setting is not reached;
interrupting a heating device enable signal (26) thereby to implement the delayed cycle control, wherein the heating device enable signal (26) comprises a signal externally input to the boiler (1) which takes priority over an internal thermostatic control of the heating device in the boiler when it is not interrupted by the interrupt unit.

6. A method as claimed in claim 5, comprising performing a calibration operation to determine the upper temperature threshold.

7. A method as claimed in claim 6, wherein the calibration operation further comprises measuring a cooling time between pre-calibration internal upper and lower thermostat control settings.

8. A method as claimed in claim 6 or 7, wherein the upper temperature threshold is set equal to the pre-calibration internal upper temperature threshold, and after the calibration the internal upper temperature threshold is increased.

9. A method as claimed in claim 8, wherein after the calibration the internal pre-calibration lower temperature threshold is increased.

10. A method as claimed in claim 6 or 7, wherein the upper temperature threshold is set below the pre-calibration internal upper temperature threshold.

11. A method as claimed in claim 10, wherein the lower temperature threshold is set below the pre-calibration internal lower temperature threshold.

12. A method as claimed in any one of claims 5 to 11, wherein the lower temperature threshold is controlled dynamically.

13. A method as claimed in claim 12, wherein the lower temperature threshold is set to one of a fixed set of temperatures.

14. A method as claimed in claims 12 or 13, wherein the lower temperature threshold is selected based on a temperature measurement at a fixed point in time after the upper temperature threshold is reached.

15. A method as claimed in any one of claims 5 to 14, wherein the heating device enable signal (26) comprises a building management system burner enable signal.

## Patentansprüche

1. Kesselsteuerungssystem zum Steuern einer Heizvorrichtung (2) in einem Kessel (1), aufweisend:
ein verzögerter Zyklus-Controller (11; 40) zum Aktivieren und Deaktivieren der Heizvorrichtung (2) auf Grundlage eines oberen Temperaturschwellenwerts und eines unteren Temperaturschwellenwerts; und
einen Temperatursensor (22) zum Messen einer Kesseltemperatur,
**dadurch gekennzeichnet, dass** das System aufweist:
eine Unterbrechungseinheit (28; 42) zum Unterbrechen eines Heizvorrichtungs-Aktivierungssignals (26), um damit eine verzögerte Zyklussteuerung des verzögerten Zyklus-Controllers umzusetzen, wobei das Heizvorrichtungs-Aktivierungssignal (26) ein von außen in den Kessel eingegebenes Signal ist, das Vorrang vor einer internen thermostatischen Steuerung der Heizvorrichtung in dem Kessel hat, wenn es nicht durch die Unterbrechungseinheit unterbrochen wird.

2. System nach Anspruch 1, wobei die Unterbrechungseinheit (28, 42) einen Relaisschalter (42) aufweist.

3. System nach einem der vorhergehenden Ansprüche, wobei der verzögerte Zyklus-Controller (11, 40) angepasst ist, um den unteren Temperaturschwellenwert auf Grundlage von Temperaturmessungen einzustellen.

4. System nach einem der vorhergehenden Ansprüche, wobei das Heizvorrichtungs-Aktivierungssignal (26) ein Gebäudeverwaltungssystem-Brenneraktivierungssignal aufweist.

5. Verfahren zum Steuern einer Kesselheizvorrichtung (2) in einem Kessel (1), aufweisend:
Abfühlen einer Kesseltemperatur; und
Aktivieren und Deaktivieren der Heizvorrichtung (2) auf Grundlage eines oberen Temperaturschwellenwerts und eines unteren Temperaturschwellenwerts zum Bereitstellen einer verzögerten Zyklussteuerung,
**dadurch gekennzeichnet, dass** der obere Temperaturschwellenwert und untere Temperaturschwellenwerte unter den internen oberen und unteren Thermostat-Steuerungseinstellungen des Kessels (1) liegen, sodass die interne obere Thermostat-Steuerungseinstellung nicht erreicht wird;
Unterbrechen eines Heizvorrichtungs-Aktivierungssignals (26), um damit die verzögerte Zyklussteuerung umzusetzen, wobei das Heizvorrichtungs-Aktivierungssignal (26) ein von außen in den Kessel (1) eingegebenes Signal ist, das Vorrang vor einer internen thermostatischen Steuerung der Heizvorrichtung in dem Kessel hat, wenn es nicht durch die Unterbrechungseinheit unterbrochen wird.

6. Verfahren nach Anspruch 5, aufweisend ein Ausführen eines Kalibriervorgangs zum Bestimmen des oberen Temperaturschwellenwerts.

7. Verfahren nach Anspruch 6, wobei der Kalibriervorgang ferner ein Messen einer Abkühlzeit zwischen internen oberen und unteren Vorkalibrierungs-Steuereinstellungen des Thermostaten aufweist.

8. Verfahren nach Anspruch 6 oder 7, wobei der obere Temperaturschwellenwert gleich dem internen oberen Vorkalibrierungs-Temperaturschwellenwert eingestellt wird und der interne obere Temperaturschwellenwert nach der Kalibrierung erhöht wird.

9. Verfahren nach Anspruch 8, wobei der interne untere Vorkalibrierungs-Temperaturschwellenwert nach der Kalibrierung erhöht wird.

10. Verfahren nach Anspruch 6 oder 7, wobei der obere Temperaturschwellenwert unter den internen oberen Vorkalibrierungs-Temperaturschwellenwert eingestellt wird.

11. Verfahren nach Anspruch 10, wobei der untere Temperaturschwellenwert unter den internen unteren Vorkalibrierungs-Temperaturschwellenwert eingestellt wird.

12. Verfahren nach einem der Ansprüche 5 bis 11, wobei der untere Temperaturschwellenwert dynamisch gesteuert wird.

13. Verfahren nach Anspruch 12, wobei der untere Temperaturschwellenwert auf einen von einem festen Satz von Temperaturen eingestellt wird.

14. Verfahren nach Anspruch 12 oder 13, wobei der untere Temperaturschwellenwert auf Grundlage einer Temperaturmessung an einem festen Zeitpunkt nach Erreichen des oberen Temperaturschwellenwerts ausgewählt wird.

15. Verfahren nach einem der Ansprüche 5 bis 14, wobei das Heizvorrichtungs-Aktivierungssignal (26) ein Gebäudeverwaltungssystem-Brenneraktivierungssignal aufweist.

## Revendications

1. Système de commande de chaudière servant à commander un dispositif de chauffe (2) d'une chaudière (1), comprenant :
un organe de commande de cycle à retard (11 ; 40) servant à activer et à désactiver ledit dispositif de chauffe (2) sur la base d'un seuil haut de température et d'un seuil bas de température ; et
un capteur de température (22) servant à mesurer une température de chaudière,
**caractérisé en ce que** le système comprend :
une unité d'interruption (28 ; 42) servant à interrompre un signal d'activation (26) de dispositif de chauffe de façon à ainsi mettre en oeuvre une commande de cycle à retard de l'organe de commande de cycle à retard, dans lequel le signal d'activation (26) de dispositif de chauffe est une entrée extérieure de signal dans la chaudière qui prend la priorité sur une commande thermostatique interne du dispositif de chauffe de la chaudière lorsque ce dernier n'est pas interrompu par l'unité d'interruption.

2. Système selon la revendication 1, dans lequel l'unité d'interruption (28, 42) comprend un contacteur-relais (42).

3. Système selon l'une quelconque des revendications précédentes, dans lequel l'organe de commande de cycle à retard (11, 40) est conçu pour fixer le seuil bas de température sur la base de mesures de température.

4. Système selon l'une quelconque des revendications précédentes, dans lequel le signal d'activation (26) de dispositif de chauffe comprend un signal d'activation de brûleur de système de gestion d'édifice.

5. Procédé de commande d'un dispositif de chauffe (2) de chaudière d'une chaudière (1), comprenant :
la détection d'une température de chaudière ; et
l'activation et la désactivation dudit dispositif de chauffe (2) sur la base d'un seuil haut de température et d'un seuil bas de température de façon à établir une commande de cycle à retard,
**caractérisé en ce que** le seuil haut de température et le seuil bas de température sont inférieurs aux réglages de commande thermostatiques haut et bas internes de la chaudière (1), de sorte que le réglage de commande thermostatique haut interne ne soit pas atteint ;
l'interruption d'un signal d'activation (26) de dispositif de chauffe de façon à ainsi mettre en oeuvre la commande de cycle à retard, dans lequel le signal d'activation (26) de dispositif de chauffe comprend une entrée extérieure de signal dans la chaudière (1) qui prend la priorité sur une commande thermostatique interne du dispositif de chauffe de la chaudière lorsque ce dernier n'est pas interrompu par l'unité d'interruption.

6. Procédé selon la revendication 5, comprenant l'exécution d'une opération de calibrage pour déterminer le seuil haut de température.

7. Procédé selon la revendication 6, dans lequel l'opération de calibrage comprend en outre la mesure d'un temps de refroidissement entre des réglages de commande thermostatiques haut et bas internes préalables à un calibrage.

8. Procédé selon la revendication 6 ou 7, dans lequel le seuil haut de température est fixé à une valeur égale au seuil haut de température interne préalable à un calibrage, le seuil haut de température interne étant augmenté après le calibrage.

9. Procédé selon la revendication 8, dans lequel le calibrage du seuil bas de température interne préalable à un calibrage est augmenté après le calibrage.

10. Procédé selon la revendication 6 ou 7, dans lequel le seuil haut de température est fixé à une valeur inférieure au seuil haut de température interne préalable à un calibrage.

11. Procédé selon la revendication 10, dans lequel le seuil bas de température est fixé à une valeur inférieure au seuil bas de température interne préalable à un calibrage.

12. Procédé selon l'une quelconque des revendications 5 à 11, dans lequel le seuil bas de température est commandé de manière dynamique.

13. Procédé selon la revendication 12, dans lequel le seuil bas de température est fixé à une valeur d'un ensemble défini de valeurs de températures.

14. Procédé selon la revendication 12 ou 13, dans lequel le seuil bas de température est choisi sur la base d'une mesure de température à un instant défini après avoir atteint le seuil haut de température.

15. Procédé selon l'une quelconque des revendications 5 à 14, dans lequel le signal d'activation (26) de dispositif de chauffe comprend un signal d'activation de brûleur de système de gestion d'édifice.
